# EUROPEAN PATENT APPLICATION

(11) **EP 1 492 309 A2**
(43) Date of publication of application: **29.12.2004**
(21) Application number: 04253669.8
(22) Date of filing: 18.06.2004
(51) Int. Cl.: H04L 29/08

(54) **Equipment area network**

(30) Priority: 23.06.2003 US 601689
(71) Applicant: THE BOC GROUP, INC., Murray Hill, New Providence, New Jersey 07974 (US)
(72) Inventor: Russell, Thomas Cutler, Murray Hill, NJ 07974 (US); Gibbins, Nigel James, Pevensey, East Sussex BN24 5PA (GB); Marini, Lawrence Gerard, Worthing, West Sussex BN14 4ND (GB); Grant, Robert Bruce, Steyning, West Sussex BN44 3RD (GB)
(74) Representative: Booth, Andrew Steven

(57) **Abstract**

An equipment area network is provided for each of a plurality of pieces of industrial equipment by connecting to each a controller, a Web server being connected to or integral with the controller, and a router connecting between the controller and a LAN or WAN, the router serving to both selectively isolate the PLC from the LAN or WAN, and to route traffic therebetween that may include Web traffic.

## Description

The present invention relates generally to data communication for the monitoring and control of machine elements or industrial equipment, and more particularly relates to data communication networks for controlling the access and bidirectional flow of data between control and monitoring networks that may be remotely located from industrial equipment being controlled and monitored.

Current generation industrial equipment is often connected together in a network to provide remote monitoring and control functions. In a typical application, a computer running SCADA (Supervisory Control and Data Acquisition) software communicates with industrial equipment over a data network. Quite often, the SCADA software is monitoring a number of different pieces of industrial equipment. To set up this system, the SCADA software is programmed with the network address of each piece of equipment and also the mapping of specific information in the equipment to data registers within the equipment. By polling each piece of equipment and requesting the contents of the desired registers, the SCADA software can display the status of the entire system or even the internal status of any connected piece of equipment.

While this arrangement produces good results, the SCADA software must contain representations for each piece of connected equipment. If there are any changes to the equipment being monitored, changes to the SCADA software are required. For example, if a new model of vacuum pump is installed in place of an old model, the mapping of information to registers might be different. This means that the people maintaining the SCADA software must have intimate knowledge of the data interface of each piece of equipment connected to the system. In addition to this, if a device is added to the system, the SCADA software might not recognize this event and simply ignore the new equipment.

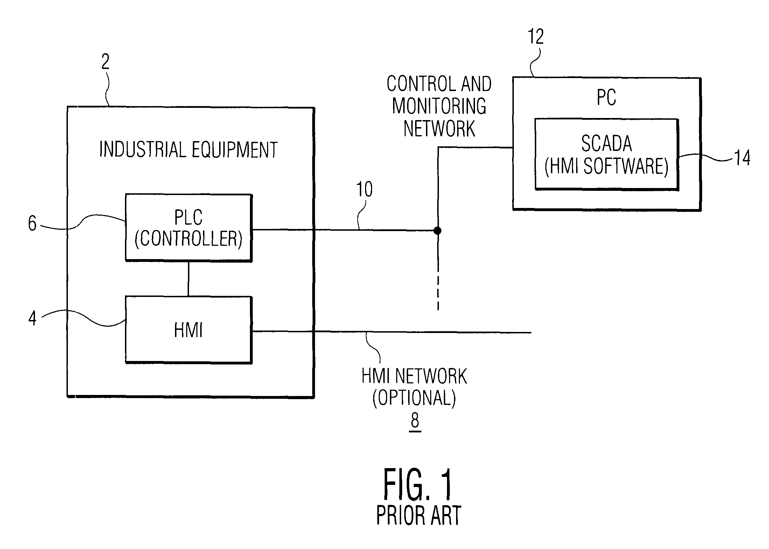

In the prior art, as shown in Figure 1, the interface to a piece of industrial equipment 2 is often divided into two parts. The first part is the local human machine interface (HMI) 4. This HMI 4 typically consists of a computer (not shown) or other controller along with a touch screen (not shown). The touch screen may be replaced with simple buttons depending on the application. The HMI 4 is connected directly to a programmable logic controller (PLC) 6 typically in the equipment 2, through use of a serial interface such as RS232, for example. During operation, the HMI 4 periodically requests the state of the machine from the controller 6, and displays this data in a predetermined format on its screen (not shown).

In order to create a program for operating the HMI 4, input/output and data registers (not shown) of the PLC 6 are mapped to the registers in the HMI program. This process can be done manually by copying the register locations from the PLC 6 into an HMI software or programming development package or in some cases it can be automated by importing the register mapping (or tag database) using software designed for that purpose. Once the registers have been mapped in the HMI 4, a program can be created which provides a visual display of the equipment 2, and typically allows for the control of various functions. The HMI 4 operates by periodically polling the PLC 6 to get the values of the registers and updates its display.

In order to update the display program on the HMI 4, a new program can typically be installed from a floppy disk or other portable storage medium. Alternatively, the program can be installed by connecting a PC (personal computer) containing the updated program directly to the HMI 4 using a serial or other cable. In some cases, the HMI 4 itself is on a network 8 that may be the same as the control network or completely separate. The HMI 4 can then receive updates through network 8.

The HMI software or program is proprietary in nature. Each vendor of HMI software creates their own software development environment and provides tools for the user to create graphic representations of the equipment and processes. Changing the HMI display often means changing the software along with it, so user companies have a strong interest in keeping the same brand.

The PLC 6 is typically connected to an industrial network 10, and can then be monitored by a remote monitoring device such as a PC 12 running supervisory control and data acquisition (SCADA) 14 software. The SCADA 14 is the second part of the HMI 4 and consists of HMI software, similar in nature to the HMI 4 software running on the equipment itself. The SCADA 14 software can also monitor several pieces of equipment at the same time, and includes many more resources for interfacing to higher level networks and databases.

The SCADA 14 program is also written in much the same way as the HMI 4 program. Registers (not shown) in the PLC 6 are mapped to variables in the SCADA 14 program. The SCADA 14 program or software will then monitor these registers by periodically polling the PLC 6 for the data, just like the HMI 4. In fact, in many cases the same screens designed for the HMI 4 are re-designed for the SCADA 14 program package.

Due to the fact that the SCADA 14 software is often a different brand than the HMI 4 software, different tool sets are used for the creation of the HMI 4 program and for the remote monitoring SCADA 14 program.

In effect, the display (not shown) is designed twice; the programmer must map the PLC 6 registers once into the HMI 4 software, and then again into the SCADA 14 software. Note that if the SCADA 14 and HMI 4 programs are the same brand, the manufacturer will typically provide tools to allow both software programs to share the same PLC 6 tag database.

According to the present invention there is provided an equipment area network (EAN) for at least one piece of equipment, the EAN comprising a controller connected to said equipment; a local Web server connected to said controller; and isolation means connected to said Web server, for selectively isolating said EAN from other networks.

The present invention provides an industrial equipment area network (EAN), wherein each machine element or piece of industrial equipment within the network includes its own user interface, respectively, for permitting each respective element to be accessed by any Web browser. In the industrial equipment network each piece of industrial equipment or machine element is provided with a dedicated controller connected to the equipment, a Web server both connected to the controller and programmed for selectively outputting Web pages detailing that piece of equipment's identification, functions, and connection and interface with other pieces of equipment, and router/switch means connected between the Web server and a network outside the EAN, for permitting the controller to communicate with local Web servers associated with other equipment on the EAN, or with remote Web servers over a LAN or the Internet, for example. In one embodiment of the invention, each machine element or piece of equipment in the equipment area network is connected through its respective router to a local area network (LAN), over which the machine elements can communicate via dedicated Web browsers connected to their respective router/switch means with one another, or with remote control and monitoring network or apparatus, while each piece of equipment or machine element remains otherwise individually isolated from the LAN via their respective router/switch means.

The prior art teaches the use of a Web server to provide formatted data directly from the control system or equipment, but it does not describe an entire system where both local and remote operator panels are Web browsers and data is presented in a consistent way to enable automatic monitoring of the equipment, as does the present invention. In the present invention a "plug and play" environment for industrial equipment is provided. Each piece of equipment is provided with its own user interface so that it can be accessed by any Web browser. Each piece of equipment also is configured to fully describe its operational parameters in a universally accepted protocol so that it can be automatically integrated into a control and monitoring system. Integral to this invention is the use of widely accepted standards including Ethernet networking, TCP/IP (transmission control protocol/internet protocol) HTML (hypertext markup language), and XML (extensible markup language) data. Note that the same methodology can be applied to other networking, data and display systems.

According to another aspect of the present invention there is provided an equipment area network (EAN) for a plurality of pieces of equipment, comprising a plurality of local controllers each being dedicated and connected to an individual one of said plurality of pieces of equipment, respectively; a plurality of local Web servers each being dedicated to an individual one of said plurality of controllers, respectively; and local isolation means for selectively isolating said equipment area network from other networks outside of said equipment area network, said plurality of local Web servers being individually connected to said isolation means.

According to another aspect of the present invention there is a method of providing an equipment area network (EAN) for each of one or more pieces of equipment, wherein for the or each piece of equipment the method comprises the steps of connecting a local controller to the piece of equipment, connecting a local Web server to said controller, connecting a local router between said Web server and a computer network, for providing isolation therebetween while allowing selective communication therebetween; and assigning a unique network address to said router for devices outside the EAN.

The EAN can be configured to perform the following steps:
(A) configuring said router to receive requests from Web browsers both local and remote to said EAN;
(B) responding to a request from a Web browser by having said router check the source network address of the requesting browser;
(C) determining in response to a requesting local Web browser the destination network address it is requesting;
(D) configuring said router to respond to a destination network address for a remote Web server by using network address translation (NAT) to translate the associated source network address;
(E) forwarding via said router to said remote Web server an answer to the request;
(F) receiving via said router a response from said remote Web server that it received the answer; and
(G) forwarding the response to the associated said local Web browser of said EAN.
   The EAN can be configured to perform after step (B) the steps of:
(H) determining in response to a requesting remote Web browser the destination network address it is requesting;
(I) ignoring the request in response to the destination network address being for a remote Web server;
(J) sending the request to the associated local Web server in response to the destination network address being that of another local Web server;
(K) Operating the associated local Web server to check the source network address of the Web browser making the request;
(L) responding to the request via the associated said local Web server using remote privileges if the source network address is that of a remote Web browser; and
(M) forwarding a response via the associated said local router to the requesting remote browser.
   The EAN can also be configured to perform, after step (K) and before step (L) the step of:
(N) authenticating via the associated said local Web server the password of the requesting remote Web browser.
   The EAN can be further configured to perform, after step (K) the steps of:
(O) responding to the request via the associated said local Web server using local privileges if the source network address is that of a requesting local Web browser; and
(P) forwarding a response via the associated said local router to the requesting local browser.

After step (K) and before step (O) the EAN may perform the step of:
authenticating via the associated said local Web server the password of the requesting local Web browser.

Various embodiments of the present invention are described in detail with reference to the accompanying drawings, in which like items are identified by the same reference designation, wherein:
Figure 1 shows a block schematic diagram of a known configuration for connecting industrial equipment including machine elements to one another and/or to remotely located control and monitoring networks via the Web;
Figure 2 shows a block schematic diagram of a Web based human machine interface (HMI) permitting individual pieces of industrial equipment or machine elements to exchange data over the Web with remotely located control and monitoring networks, for one embodiment of the invention;
Figure 3 shows a block schematic diagram illustrating the isolation of an equipment area network from a LAN, for one embodiment of the invention;
Figure 4 shows a block schematic diagram of an equipment area network interface, with local and remote devices;
Figure 5 shows a flowchart for processing a local or remote Web browser's request for accessing, monitoring, and control data pertaining to a particular machine element or piece of industrial equipment within an industrial equipment network for; and
Figure 6 shows a screen image of a Web page showing the status of a piece of equipment.

As previously mentioned, with reference to Figure 1 a typical human-machine interface (HMI) 4 for a piece of industrial equipment 2 consists of a display screen along with keypad input (touch screens are common). The controller 6 in the equipment 2 services the HMI 4 during idle periods and processes requests to obtain or set control variables. The central processing unit (CPU) in the display is responsible for taking the data and formatting it for operator input and output. This operation is satisfactory for a local HMI 4, but for remote operation, each HMI 4 must contain the instructions for the proper formatting of the display.

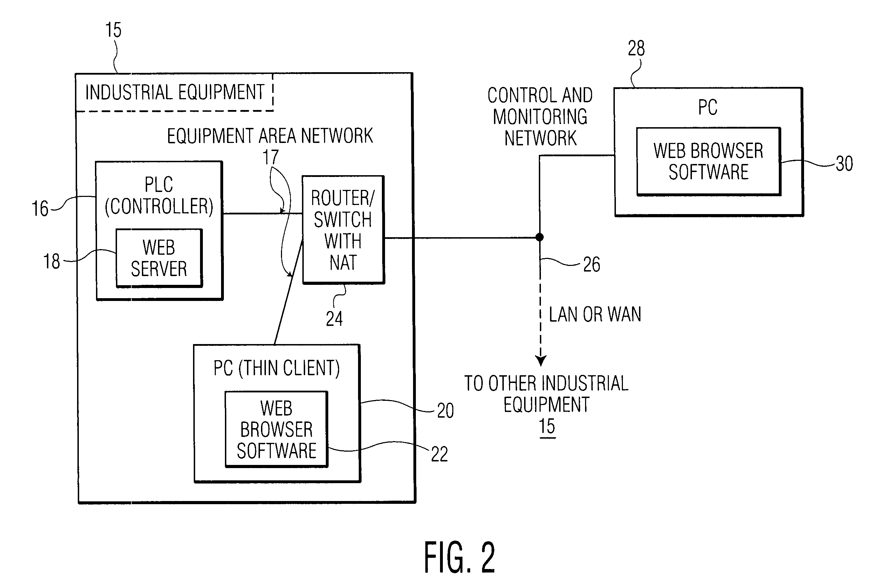

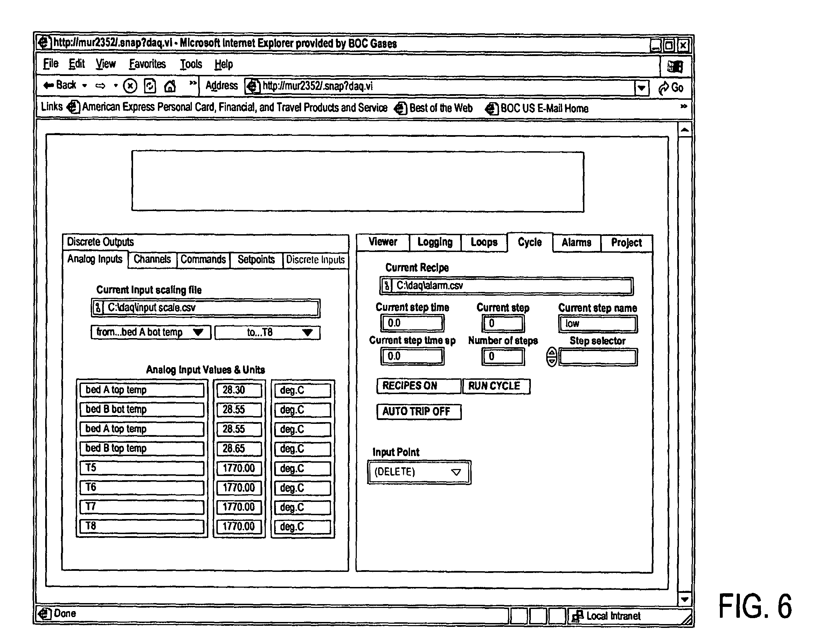

In one embodiment of the present invention, as shown in Figure 2, embedded into each piece of the industrial equipment 15 or machine element itself for providing an equipment area network (EAN) 17, are a PLC 16 with Web server 18, an optional thin client PC 20 with Web browser 22, and a router/switch 24, so that a user need only have an Ethernet connection 26 (LAN or WAN, for example), and a Web browser (PC 28 with Web browser software 30, for example) for access. Each piece of equipment 15 or machine element uses its respective Web server 18 for translating internal operating data into Web pages. For example, Figure 6 is an example of a screen image of a Web page showing operating data, specifically temperatures in various portions of the associated piece of equipment.

Note that in the preferred embodiment of the invention the thin client PC 20 with Web browser 22 is included. However, for the EAN 17, communication through the router/switch 24 can be made directly to the Web server 18, from outside or inside the EAN 17.

As a further benefit of the present invention, since the Web server 18 need not see any distinction between local and remote users, the local operator panel can be changed from a proprietary graphical interface to a dedicated Web browser 22 (also a PC 20 known as a thin Web client) on the same sub-net as the controller 16. One need not design separate user interfaces for local and remote operation. Each piece of industrial equipment 15 in the preferred system then has both a Web server 18 for formatting the data and a thin Web browser or client 20 for displaying the data. Since each thin Web client 20 is just a node on the network, it can also access any other piece of equipment 15 on the network as if it were the local display. This means that an operator at any display panel can check the status of any other piece of equipment 15 (as permitted by security protocols).

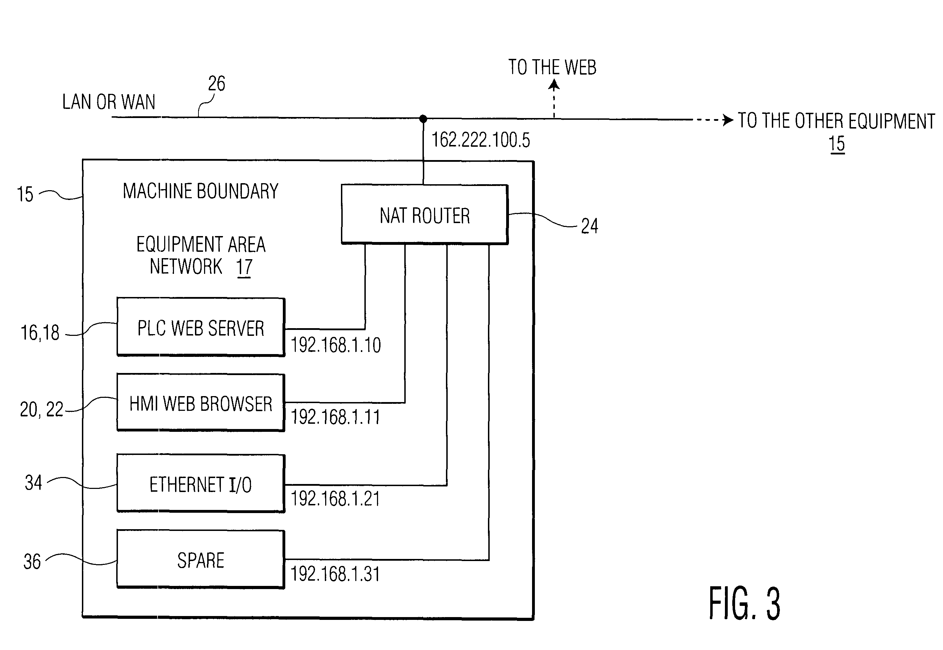

In order to distinguish between a local operator and a remote operator, the Web server 18 can make use of passwords to establish the authority of a given Web browser 22 or 30. As an alternative, in another embodiment of the invention, a small private network can be created by using a router 24 with network address translation (NAT). The router 24 provides a firewall between the local equipment and the rest of the LAN 26. The Internet Protocol (IP) address for the server 18 and the display (part of Web browser 22) can be fixed local addresses. The router 24 itself has an IP address visible to users connected to the LAN 26, and routes requests for Web services directly to the Web servers 18 of selected equipment 15. With reference to Figure 3, since the equipment IP address is a local fixed address, the local Web browser 22 need only access this address to display the equipment status. The Web browser 22 at each piece of equipment can thus be configured exactly the same since the IP address of the individual pieces of local attached equipment 15 is always the same, as shown in Figure 3. The local Web browser 22 can still access other pieces of equipment 15 given their LAN IP address. It is likely that a central server (not shown) will provide links to other equipment 15 so that the equipment based Web client will not need to be programmed with these links. The creation of the local equipment network 17 also allows for the addition of local Ethernet based sensors and controls which are expected to become more common in the next few years.

With further reference to Figure 2, the preferred embodiment of the invention provides both a local HMI via thin client PC 20 with Web browser 22, and a remote SCADA or HMI including PC 28 with a standard Web browser 30. Note that PC 20 and PC 28 can each be either a thin client or standard PC. Each piece of industrial equipment 15 includes a PLC 16 with a Web server 18, and a thin client PC 20 with a Web browser 22 as previously mentioned. The controller 16 is responsible for the local control of the equipment 15, and may take the form of a computer rather than a programmable logic controller (PLC) 16, as shown. The Web server 18 can be implemented as software residing on the controller hardware, or it may be a physically separate unit linked to the controller 16 by an electrical interface. The important thing is that either for each controller 16 or for a plurality of controllers 16 there is an associated Web server 18. The Web server 18 provides a user interface in the form of Web pages. These Web pages reside on the Web server and provide a real-time view of the equipment 15 being controlled. To view these Web pages, an attached computer or other device running a Web browser such as Internet Explorer, Netscape or Mozilla is used. The Web pages will contain links to the underlying control and status variables in the controller 16. For example, there may be a Web page that displays the current temperature and pressure inside the equipment. As previously discussed, Figure 6 is an example of such a Web page. This display can be achieved using simple HTML, but more likely Java or JavaScript will be employed to animate the display and provide a continually changing readout of the current conditions. The use of a Java applet allows new data to be transmitted from the Web server to the Web browser without the need to reload the whole Web page and thus provides a smoother update on the screen.

The local HMI is implemented using a Web browser 22 running on a computer 20. Computer 20 typically has little functionality beyond the Web browser 22 itself. Accordingly, a typical configuration would be a computer such as PC 20 with operating system and browser software 22. The hardware, in one example, contains a processor, random access memory, and flash based memory for persistent storage. No rotating media hard drive would be required although it could be used. The remote HMI or SCADA system is provided in this example by PC 28 with Web browser software 30, thereby minimizing or eliminating any new software requirements to handle remote connections.

Ethernet enabled devices or pieces of equipment 15 are identified on the network 26 using an IP addresses, respectively. This address is unique to each piece of equipment or device 15, and allows a client or user to access a particular piece of equipment or device 15. To allow for the large number of required IP addresses all over the world, addresses are broken down into sub-nets. Two devices or pieces of equipment 15 on the same sub-net can communicate directly, but if pieces of equipment 15 reside on different sub-nets, then the use of a gateway server is required to route traffic from one sub-net to another.

As shown in Figure 3, rather than have the equipment Web server 18 connected directly to a LAN or WAN 26, a router/switch device 24 is used to isolate an Ethernet network 34 inside the equipment from the LAN. In effect, an equipment area network (EAN) 17 is created. Devices residing on this EAN 17 are usually physically local to the equipment 15 itself or at least treated as an integral part of the equipment 15. EAN 17 devices or equipment 15 will each include the Web server 18 for the controller 16, and the optional Web browser-based HMI 20, 22, optional Ethernet based input/output modules 34, an optional spare port 36 for connection of a laptop computer, sub-systems of the equipment, and so forth, for example. When a device outside of the EAN 17 wants to communicate with a device inside the EAN 17, the router/switch 24 routes the traffic as appropriate. The router/switch 24 must have an IP address on the LAN or WAN 26, while the devices on the EAN 17 can use local IP addresses. These local addresses can be reused on other pieces of equipment 15 since they are not visible on the LAN. A request for a Web page made from the LAN or WAN 26 of a piece of equipment 15 will cause the equipment router 24 to forward the request to the Web server 18 on the EAN 17. The response from this Web server 18 is then forwarded back to the original requestor, making it appear as if the piece of equipment or device 15 with a LAN address serviced the request. Requests made from the browser 20, 22 inside the EAN 17 for access outside the EAN 17 are converted using a network address translation (NAT) of router 24 into requests that appear to come from the router 24 and thus hide the EAN 17 from the outside world.

One key benefit of having the EAN 17 is that the Web server 18 can distinguish between requests made from a local HMI and those made from a remote PC. Examination of the requesting unit's IP address can reveal if the request came from the same sub-net (EAN) or from the larger (LAN) 26, or even from the Internet itself (an address outside the LAN). The Web server 18 can then use this address combined with password authentication to decide what communications to allow for the requesting device. For example, the Web server 18 might allow a request from its own EAN 17 to shutdown a process, allow a request from the LAN or WAN 26 to change a process parameter, and allow only monitoring requests from the Internet. While this same functionality can be achieved with password protection, use of an IP address for security provides a key benefit since it cannot be circumvented by simply knowing the correct password.

Another key benefit is that the configuration of the network parameters for the Web server 18 and HMI 20, 22 can be simplified since the same IP address can be used on every piece of equipment 15. For example, as shown in Figure 3, IP address 192.168.1.10 could be assigned to all Web servers and IP address 192.168.1.11 to all local browser based HMI computers. The home page of the browser 20, 22 could be assigned IP address 192.168.1.10 and would not have to change to meet the LAN addressing requirements of an installation. The router 24 can also be preconfigured with the correct port forwarding so that any Web page requests that it receives are forwarded to the Web server at IP address 192.168.1.10. Regardless, the router 24 will still need to be configured on the LAN 26 and this can, for example, be accomplished with either a fixed LAN IP address or using a DHCP (dynamic host control protocol) server on the LAN 26.

With further reference to Figure 3, note that in the EAN 17, hypertext transfer protocols (HTTP) request for access to the equipment in the EAN 17 associated with IP address 162.222.100.5 are routed directly to the PLC Web server 16, 18 at address 192.168.1.10. Also, the local HMI Web browser 20, 22 can access the PLC Web server 16, 18 by using the latter's local address of 192.168.1.10. For security purposes to limit access, the PLC Web server 16, 18 can be programmed to make use of both passwords and IP address for authentication. Also, the HMI Web browser 20, 22 can assess other Web servers via the network address translation (NAT) router 24.

Another key benefit of the EAN 17 is that Ethernet traffic on the EAN is controlled by the router 24. General traffic on the LAN 26 does not reach the EAN and thus does not consume its bandwidth. As a result, excessive EAN 17 traffic is substantially eliminated, thereby preventing interference with the operation of the equipment's local HMI 20, 22 or Ethernet I/O 34. If the HMI 20, 22 or Ethernet I/O 34 cannot communicate with the controller 16 in a timely manner, this could result in a performance or safety problem.

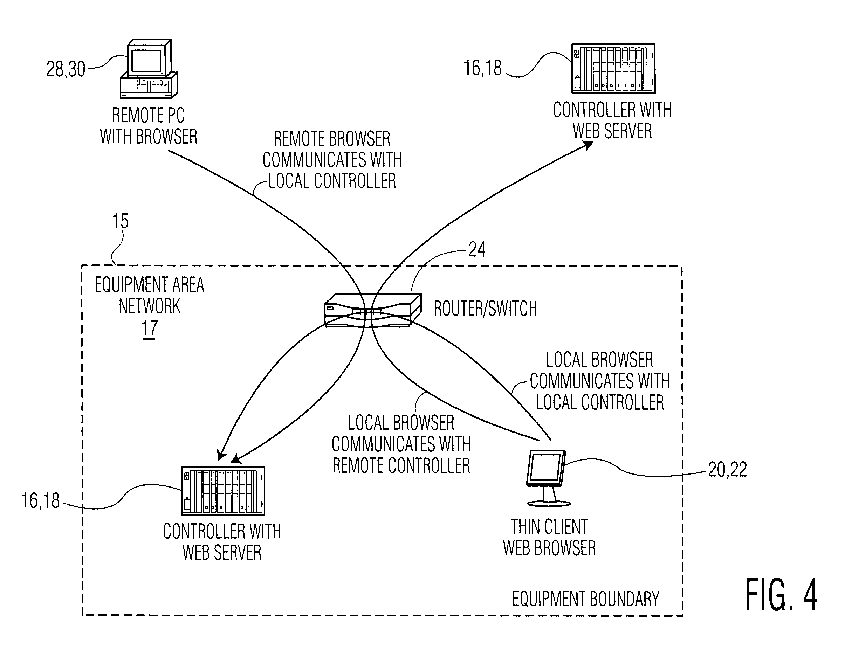

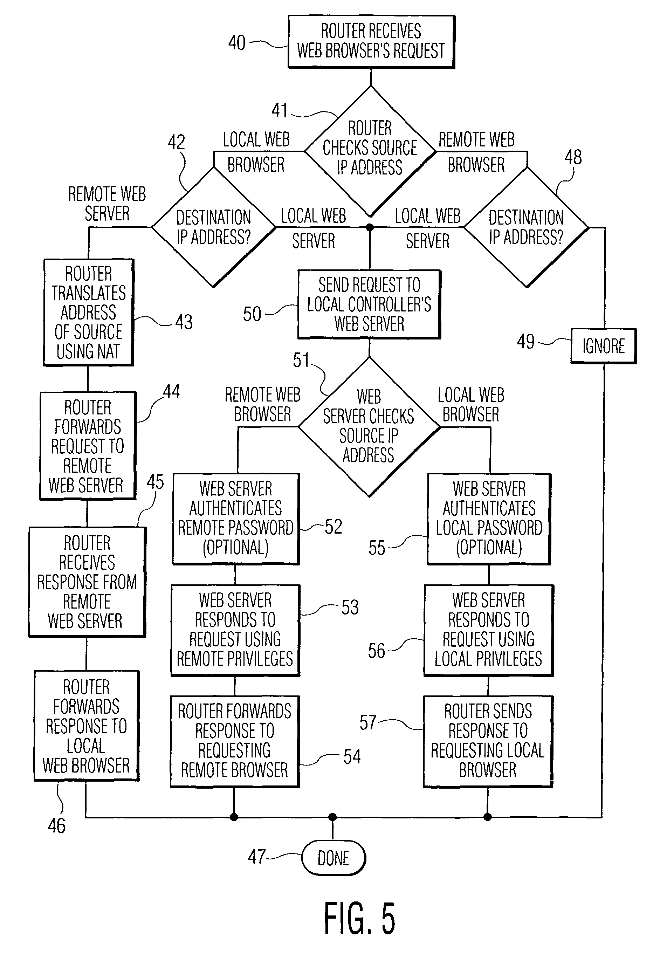

Figure 4 provides a schematic showing how the router 24 may be connected to local and remote Web servers and Web browsers. Figure 4 is helpful relative to reviewing the flowchart of Figure 5, describing how Web browser 22 or 30 requests are processed by the router 24 and local Web server 18.

A further aspect of the invention is to have each piece of equipment 15 fully describe its operation and interface through the use of standard Web protocols such as HTML and XML. HTML is typically used to format data for viewing by people, and XML is used for format data for extraction by a computer. By making use of industry-standard XML, many features of the industrial equipment can be described. These include commands, operating conditions, typical set-points, factory default values and test results. In order to derive the maximum benefit from using XML it is important that the same "grammar" is used for every model of like equipment. A vacuum pump might have a setting for the core temperature referred to by the designation "core_temperature." If one ensures that all vacuum pumps have a parameter "core_temperature," then it is possible to construct a monitoring system that does not need any custom setup. The equipment 15 itself provides the data, the labeling of the data and the range of acceptable values.

For example, one could plug in a vacuum pump and be automatically notified by a monitoring system that the current consumption has risen to a value 30% higher than that measured in the factory and thus may require service.

Each piece of equipment 15 can be configured to contain software to allow it to be "discovered" by a server computer 28 attached to the same LAN 26. This can be achieved either by having the device broadcast a message on the network 26 as soon as it is placed on the network 26, or by having a server 28 poll for new devices on a regular basis. For the first case, the equipment 15 would broadcast its presence in much the same way as it obtains its IP address using DHCP. A message is broadcast to all nodes on a particular port and if there is a server listing, it responds and records the presence of the device. For the second case, a server on the network simply broadcasts a request for identification to all nodes on the network on a regular basis and keeps track of all operating nodes. This has the advantage that it will rapidly detect a missing device.

Once the equipment 15 has been added to the system, the SCADA system 28, 30 can begin monitoring the equipment 15 by making use of the data accessible via HTML Web pages and XML data. If an operator needs to see the details of any specific piece of equipment 15 on the network, the Web page for that piece of equipment 15 is displayed on the monitoring station Web browser 28, 30. Changes to equipment do not require any new software to be installed at the monitoring station.

As previously described relative to Figures 2 through 4, in one embodiment of the invention each piece of industrial equipment 15 within a common facility, for example, includes a PLC 16 with a Web server 18, a router/switch 24, and a PC 20 with Web browser 22, for permitting communication over a LAN or WAN 26 with other pieces of industrial equipment 15 similarly configured. In the simplest configuration of the invention, the local PC 20 with Web browser 22 is not included. Also, each piece of industrial equipment so configured can communicate via the LAN or WAN 26 over the Web with a remotely located control and monitoring network, such as a SCADA including a PC 28 with a Web browser or Web browser software 30 for permitting the PC 28 to selectively communicate with a desired piece of industrial equipment 15. In certain applications the SCADA 28 may be local to the industrial equipment 15.

The flowchart of Figure 5 shows the processing steps associated with industrial equipment 15 communicating with other pieces of industrial equipment 15 locally, or with a remotely located SCADA 28, 30 for example. Such communication is initiated via Step 40, upon a router/switch 24 receiving a request from either a local Web browser 22 of another piece of industrial equipment 15, or from a remote Web browser such as PC 28 driven by Web browser software 30, for example. Assume for the purposes of this discussion that the router/switch 24 is simply a router 24.

In response to a router 24 receiving a Web browser's request in Step 40, Step 41 is entered for the router 24 to determine the source IP address for identifying whether the request was made from a local Web browser 22 or a remote Web browser 30. If it is determined that the request was made by a local Web browser 22, Step 42 is entered for determining the destination IP address, that is to determine where the request for Web pages is to be sent. If the communication is to be made to a remote Web server such as 18 on a remote piece of industrial equipment 15, then Step 43 is entered in which router 24 translates the address of the source using NAT (network address translation). Next, in Step 44, the router 24 forwards the request to the remotely located Web server, and upon receiving a response from the remotely located Web server in Step 45, the router 24 then forwards or transmits the response to a local Web browser 22 in Step 46. The routine is then completed as shown in Step 47.

If in Step 41, the router 24 determines that the Web browser making the request is a remote Web browser 30, Step 48 is entered for determining the destination IP address. If the address is other than that of a local Web server, then Step 49 is entered, and the request is ignored, followed by terminating any further action via Step 47. Contrariwise, if either in Step 48 or in Step 42, it is determined that the destination IP address is that of a local Web server 18 in this example, then Step 50 is entered for sending a request to the Web server 18 of a local PLC 16. Next, in Step 51, the responding Web server 18 proceeds to check the source IP address. If it is determined that a source is a remote Web browser, Step 52 is entered in which the associated Web server 18 authenticates the remote password. Note that Step 52 is an optional step, in that if it is utilized and does authenticate the remote password, or if the step is not used, Step 53 is entered in which the Web server 18 responds to the request using remote privileges. The associated router 24 then forwards a response to the requesting remote browser in Step 54.

If in Step 51 the associated Web server 18 determines that the source IP address is associated with a local Web browser, then Steps 55 through 57 are pursued. These steps are similar to Steps 52 through 54, except that Steps 55 through 57 are associated with the local Web browser, whereas Steps 52 through 54 are associated with the remote Web browser, as indicated. The processing is completed after either Step 54 or Step 57 with the termination Step 47. Note that if optional Steps 52 or 55 are used, and the associated remote or local passwords are not authorized, further operation is terminated. Note that the Web server for Steps 52 always responds to a request, but the response may be an error message if the user is not authenticated.

Note that in the flowchart of Figure 5 only Web browser requests are shown. However, the associated router 24 actually handles all TCP/IP (Transmission Control Protocol/Internet Protocol) traffic. Also note that the associated router 24 uses network address translation (NAT) when a browser with a local address contacts a remote site, and alternatively uses direct switching when a browser having a local address contacts the associated local site. Also note that the associated router 24 forwards requests from a remote Web browser for Web pages to the local controller Web server 18 through use of port forwarding.

Although various embodiments of the invention have been shown and described, they're not meant to be limiting. Those of skill in the art may recognize various modifications to these embodiments, which modifications are meant to be covered by the scope of the appended claims.

## Claims

1. An equipment area network (EAN) for a piece of equipment, the EAN comprising:
a controller for controlling said equipment;
a local Web server associated with the controller for providing Web pages relating to said equipment; and
isolation means connected to said Web server, for selectively connecting the EAN to, and selectively isolating the EAN from, an external network.

2. An EAN according to Claim 1, comprising a local browser means connected to said isolation means for selectively communicating with said local web server and with an external network.

3. An EAN according to Claim 2, wherein said local browser means comprise a PC and Web browser software means for programming said PC to provide Web browser functions.

4. An EAN according to Claim 2 or Claim 3, wherein the isolation means is arrayed to translate a request received from the browser means and to communicate the translated request to the external network.

5. An EAN according to any preceding claim, wherein the controller comprises a programmable logic controller.

6. An EAN according to any preceding claim, wherein said isolation means comprises one of a router and a switch.

7. An EAN according to any preceding claim, comprising an Ethernet input/output module connected to said isolation means, the isolation means being configured to selectively isolate the module from an external network.

8. An EAN according to any preceding claim, wherein said local Web server includes means for providing Web pages identifying said piece of equipment, optionally its interconnection with other equipment, its present operating parameters, and/or other data relative thereto.

9. A network for a plurality of pieces of equipment, the network comprising, for each piece of equipment, a respective EAN according to any preceding claim, each EAN being connected to a common data network.

10. A network according to Claim 9, wherein each isolation means has a respective unique address.

11. A network according to Claim 9 or Claim 10, wherein the local Web servers each have the same network address.

12. A network according to any of Claims 9 to 11, when dependent from Claim 2, wherein the local browser means each have the same address.

13. A network according to any of Claims 9 to 12, when dependant from Claim 7, wherein the Ethernet input/output modules each have the same network address.

14. A network for a plurality of pieces of equipment, comprising a plurality of local controllers each being dedicated and connected to a respective one of said plurality of pieces of equipment, a plurality of local Web servers each being dedicated to a respective one of said plurality of controllers, and means for selectively connecting each local Web server to, and selectively isolating each local Web server from, the other local Web servers and/or an external network.

15. A method of providing an equipment area network (EAN) for a piece of equipment, the method comprising the steps of:
connecting a local controller to the piece of equipment;
providing a local Web server for said controller;
connecting a local router between said Web server and a data network, for providing isolation therebetween while allowing selective communication therebetween.

16. A method according to Claim 15, wherein at least one Ethernet Based input/output module for devices inside the EAN is connected to the router.

17. A method according to Claim 15 or Claim 16, wherein the router Is provided with a spare port for connection to one of the group consisting of a laptop computer, a sub-system of said equipment, and any other device inside the EAN.

18. A method according to any of Claims 15 to 17, wherein the router is connected to a local Web browser for selectively communicating with the local Web server and with a remotely connected network.

19. A method according to any of Claims 15 to 18, wherein a unique address is assigned to the router for devices located outside the EAN.
